# EUROPÄISCHE PATENTSCHRIFT

(11) **EP 0 644 132 B1**
(45) Veröffentlichungstag und Bekanntmachung des Hinweises auf die Patenterteilung: **11.06.1997**
(21) Anmeldenummer: 94112214.5
(22) Anmeldetag: 04.08.1994
(51) Int. Cl.: B65G 9/00

(54) **Kupplungsvorrichtung**
Coupling device
Dispositif d'accouplement

(30) Priorität: 21.09.1993 DE 4332072
(43) Veröffentlichungstag der Anmeldung: 22.03.1995
(73) Patentinhaber: GÄRTNER, Franz, D-97656 Unterelsbach (DE)
(72) Erfinder: GÄRTNER, Franz, D-97656 Unterelsbach (DE)
(74) Vertreter: Patentanwälte Dr. Solf & Zapf

(56) Entgegenhaltungen:
- EP-A- 0 338 100
- DE-A- 3 318 381
- DE-U- 8 516 343

## Beschreibung

Die Erfindung betrifft eine Kupplungsvorrichtung gemäß dem Oberbegriff des Anspruchs 1.

Eine derartige Kupplungsvorrichtung ist aus der DE 33 18 381 C2 bekannt. Diese zeichnet sich im wesentlichen dadurch aus, daß die Kupplungsglieder aus einem streifenförmigen dünnen Material bestehen und einen sich nach vorne erstreckenden Stützsteg sowie einen sich daran anschließenden Bogensteg aufweisen, wobei der Bogen des Bogenstegs einwärts zur Längsachse des Tragrohrs gerichtet ist und der Kulminationspunkt zwischen der Achse und dem Stütztsteg positioniert ist. Dabei sind die Kupplungsglieder spiegelbildlich zueinander an den Tragrohren der miteinander zu kuppelnden Fördereinrichtungen und die jeweiligen Kulminationspunkte der Kupplungsglieder seitlich versetzt zueinander angeordnet. Jeder Bogensteg ist zweckmäßigerweise ballig ausgebildet.

Die bekannte Kupplungsvorrichtung hat sich vielfach bewährt.

Aus der EP 0 338 100 A1 ist ein Hängefördersystem mit einer weiteren Kupplungsvorrichtung bekannt zum Einkuppeln zweier in einem Schienenweg befindlicher Transporteinheiten. Diese Kupplungsvorrichtung ist aufwendig mit schwenkbarem Haken ausgebildet, die in Eingriffszustand einen Rastteil umgreifen.

Die Haken können mittels Lösehebeln wieder voneinander gelöst werden. Zur Vermeidung eines ungewollten Einkuppeins zweier im Schienenweg befindlicher Transporteinheiten kann einer der Haken in eine Sperrstellung verschränkt werden.

Aufgabe der Erfindung ist, die bekannte Kupplungsvorrichtung so einzurichten, daß ein Kuppeln mit einer anderen Fördereinrichtung verhindert werden kann.

Diese Aufgabe wird durch die Merkmale des Anspruchs 1 gelöst. Vorteilhafte Weiterbildungen der Erfindung werden in den Unteransprüchen gekennzeichnet.

Anhand der Zeichnung wird die Erfindung im folgenden beispielhaft näher erläutert. Es zeigen:
- Fig. 1: eine Draufsicht auf eine erste Ausführungsform der erfindungsgemäßen Kupplungsvorrichtung im gekuppelten Zustand;
- Fig. 2: eine Draufsicht auf die erste Ausführungsform- der erfindungsgemäßen Kupplungsvorrichtung im gesperrten Zustand;
- Fig. 3: eine Frontansicht der Sperreinrichtung der ersten Ausführungsform der erfindungsgemäßen Kupplungsvorrichtung;
- Fig. 4: einen Längsquerschnitt durch die Sperreinrichtung nach Fig. 3;
- Fig. 5: eine Draufsicht auf eine zweite Ausführungsform der erfindungsgemäßen Kupplungsvorrichtung im gekuppelten Zustand;
- Fig. 6: eine Draufsicht auf die zweite Ausführungsform der erfindungsgemäßen Kupplungsvorrichtung im geperrten Zustand;
- Fig. 7: eine Frontansicht der Sperreinrichtung der zweiten Ausführungsform der erfindungsgemäßen Kupplungsvorrichtung;
- Fig. 8: eine Draufsicht auf eine weitere Ausführungsform der erfindungsgemäßen Kupplungsvorrichtung im gekuppelten Zustand;
- Fig. 9: eine Draufsicht auf die weitere Ausführungsform der erfindungsgemäßen Kupplungsvorrichtung im gesperrten Zustand;
- Fig. 10: eine Frontansicht der Sperreinrichtung der weiteren Ausführungsform der erfindungsgemäßen Kupplungsvorrichtung;
- Fig. 11: eine Draufsicht auf die Sperreinrichtung nach Fig. 10;
- Fig. 12: einen Querschnitt durch die Sperreinrichtung nach Fig. 10.

Die neue Kupplungsvorrichtung besteht aus je zwei gleich ausgebildeten, relativ breiten, hakenförmig gebogenen, blechstreifenförmigen Kupplungsgliedern 1 und 2, die - in der Draufsicht betrachtet - aus einem ebenen Bodensteg 3, einem rechtwinklig nach vorne abgebogenen Stütztsteg 4 und einem sich daran anschließenden einwärts zur Längsachse eines Tragrohres 7 hin gebogenen Kupplungsbogensteg 6 bestehen. Mit dem Bodensteg 3 ist das Kupplungsglied 1, 2 frontal jeweils an einem Tragrohr 7 befestigt, das beidendig jeweils an einem V-förmigen Tragbügel 15 mit Verbindungsmitteln 8 vor und zurück sowie zur Seite hin schwenkbar hängt. An jedem freien Ende des V-förmigen Tragbügels 15 lagert drehbar jeweils eine Laufrolle 16. Das Tragrohr 7, die Tragbügel 15 mit Rollen 16 sowie die Verbindungsmittel 8 bilden eine Fördereinrichtung, die insbesondere für die innerbetriebliche Hängeförderung in der Bekleidungsindustrie benutzbar ist, wobei die Fördereinrichtung eine an einer Laufschiene oder dergleichen hängende Tragschiene aufweist, an der die Tragbügel 15, die mit den Laufrollen 16 ausgerüstet sind, hängen, wobei sich die Laufrollen 16 auf der Tragschiene abstützen und die Tragbügel 15 nach unten hängen und die Tragbügel 15 das Tragrohr 7 oder dergleichen Haltevorrichtung tragen, wobei zwischen benachbarten Tragrohrenden die miteinander verhakbaren Kupplungsglieder 1, 2 angeordnet sind (siehe z.B. DE-PS 1 940 256).

Die Kupplungsglieder 1 und 2 sind so breit, wie der Durchmesser bzw. die Dicke des Tragrohrs 7 beträgt. Sie sind zweckmäßigerweise zumindest so breit, daß sie eine ausreichende Anlauf- bzw. Gleitfläche bilden.

Zweckmäßig ist, daß der Radius des Kupplungsbogenstegs 6 kleiner ist als die Breite des Bodenstegs 3 und der Kulminationspunkt 10 des Bogenstegs 6 zwischen der Längsachse 5 und dem Stütztsteg 4, also außermittig, angeordnet ist. Dabei ist der Radius kleiner als die halbe Breite, wobei der Bogensteg 6 einen Teil dieses Kreises bildet. Dementsprechend liegt auch der Mittelpunkt des Kreisbogens des Bogenstegs 6 außermittig. Die freie Endkante 11 des Bogenstegs 6 liegt etwa so weit zum Bodensteg 3 hin gebogen, daß der Bogensteg 6 - wie abgebildet - einen Halbkreisbogen bildet. In der Seitenansicht ist die freie Endkante 11 bogenförmig ausgebildet, wobei der Bogen dieser Kante 11 der Bogenform der aus der balligen Ausgestaltung des Bogenstegs 6 resultierenden Kalottenform angepaßt ist.

Die Länge des Stützstegs 4 und des Bogens 9 des Bogenstegs 6 sind so bemessen, daß ein Abstand des Kulminationspunktes 10 vom Bodensteg 3 gewährleistet ist, der ausreicht, daß der Bogensteg 6 des anderen Kupplungsgliedes von der Seite durch die Öffnung geschoben werden kann.

An dem dem Stützsteg 4 gegenüberliegenden Ende des Bodenstegs 3 ist ein schräg nach außen weisender Gleitsteg 12 angeordnet, wobei zwischen dem Bogen 9 und dem Gleitsteg 12 die Öffnung freibleibt, durch die ein Bogensteg 6 des anderen Kupplungsgliedes 2 paßt.

Die Kupplungsglieder 1 und 2 sind spiegelbildlich zueinander an den Tragrohren zu kuppelnder Fördereinrichtungen angeordnet, wobei die Längsachsen 5 der Tragrohre 7 miteinander fluchten, wenn die Fördereinrichtungen an einer geraden Tragschiene hängen. Demgemäß liegen die jeweiligen Kulminationspunkte 10 seitlich versetzt zueinander, wobei jedoch die beiden Bögen 9 aufeinander treffen, wenn z.B. das Tragrohr 7 in Pfeilrichtung 13 verschoben wird. Dabei können die Außenflächen der Bögen 9 aneinander vorbeigleiten. Da die Tragrohre 7 schwingend aufgehängt sind, können sie seitlich in Richtung des Doppelpfeils 14 ausweichen und nach dem Ineinandergleiten der Bögen 9 wieder in ihre achsfluchtende Ausgangslage einpendeln.

Der Abstand der Verbindungsmittel 8 im gekuppelten Zustand der Tragrohre 7 ist so gewählt, daß in ruhendem Zustand der Fördereinrichtung sich die Kulminationspunkte 10 benachbarter Kupplungsglieder 1 und 2 in Längsachsrichtung 5 überlappen.

Der Radius eines Bogenstegs 6 ist so gewählt, daß beim Ziehen der Fördereinrichtung in Kurven einer Förderstrecke die Kanten 11 der Bogenstege 6 an den Innenflächen der Bogenstege 6 formschlüssig entlanggleiten können, ohne zu verhaken. Der Radius und die Länge der Bögen 9 sind außerdem derart aufeinander abgestimmt, daß beim schiebenden Fördern der Fördereinrichtungen, wenn der Bogensteg 6 des Kupplungsgliedes 1 gegen den Bogensteg 3 des Gegenkupplungsgliedes 2 stößt, beim Kurvenfahren kein Verhaken der Kante 11 an der Ecke zwischen Bodensteg 3 und Stützsteg 4 erfolgen kann. Zudem ist der Radius der Rundung der Kanten 11 so gewählt, daß bei Steigungen oder Gefälle die Kanten 11 auf der jeweiligen Innenfläche des Bogenstegs 6 des jeweils benachbarten Kupplungsgliedes formschlüssig abgleiten können. Insofern wirken die Kupplungsglieder 1 und 2 gelenkartig in einem weiten Bereich von Freiheitsgraden bei seitlicher und höhenmäßiger Verschwenkung der Tragrohre 7 miteinander zusammen.

Die Kupplungsglieder 1, 2 sind vorzugsweise aus federndem Stahlblech oder Kunststoff hergestellt, so daß die Stege 4 und 6 gegebenenfalls federnd bzw. elastisch puffernd beim Auflaufen zweier Kupplungsglieder wirken. Der Gleitsteg 12 verhindert, daß beim Kuppeln das Gegenkupplungsglied zu weit nach außen verschwenkt wird. Er ist deshalb so lang gewählt, daß der Bogensteg 6 bereits gegen den Gleitsteg 12 schwingt, wenn die Bögen aneinander geprallt sind. Der Bogensteg 6 ist zweckmäßigerweise ballig ausgebildet, woraus ein besonders geringer Reibungswiderstand der aufeinander gleitenden Bögen 9 und 11 resultiert. Vorzugsweise verläuft der Stützsteg 4 parallel zur Längsachse 5. Erforderlich sind bei den Kupplungsgliedern 1 und 2 der Stützsteg 4 und der Bogensteg 6; ein Bodensteg 3 kann entfallen, sofern eine andere Befestigung der Kupplungsglieder 1, 2 an den Tragrohren vorgesehen ist.

Die erfindungsgemäße Kupplungsvorrichtung umfaßt eine Sperreinrichtung, die zwischen einer Kupplungsfreigabestellung und einer Kupplungsverhinderungsstellung verschwenkbar ist, in der wirksam verhindert wird, daß die Kupplungsglieder 1, 2 zweier aneinanderstoßender Fördereinrichtungen in Kupplungseingriff miteinander gelangen.

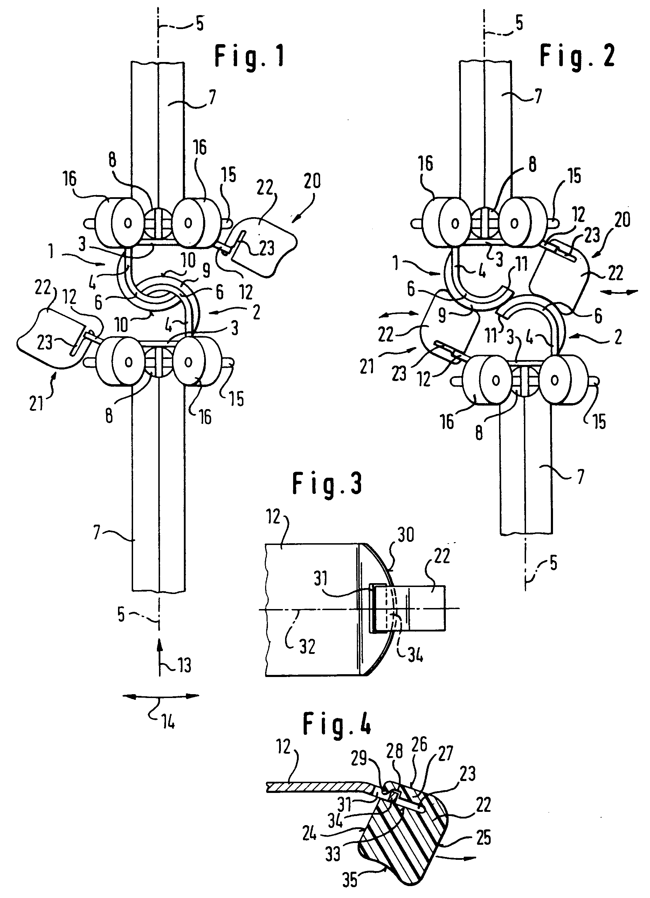

Gemäß einer ersten in den Figuren 1 bis 4 gezeigten Ausführungsform weist die erfindungsgemäße Sperreinrichtung 20, 21 einen beispielsweise aus Kunststoff bestehenden Sperrklotz 22 auf, der an das freie Ende des Gleitstegs 12 angelenkt ist. In den Sperrklotz 22 ist eine Nut 23 eingebracht, die in eine Oberfläche 24 des Sperrklotzes 22 mündet, sich bis nahe an die gegenüberliegende Oberfläche 25 des Klotzes 22 erstreckt und nahe an einer die beiden Oberflächen 24 und 25 miteinander verbindenden Oberfläche 26 des Blocks 22 so liegt, daß durch die in den Block eingebrachte Nut 23 ein Hebelarm 27 freigeformt ist, der im Bereich des Grundes der Nut 23 fest mit dem übrigen Teil des Blocks 22 verbunden ist. Der Hebelarm 27 ist nahe der Mündung der Nut 23 in die Oberfläche 24 von einer Nut 28 durchsetzt, die quer zur Nut 23 verläuft und in diese mündet und am freien Ende des Hebelarms 27 eine Nase oder Leiste 29 festlegt. Die Nut 28 ist im Querschnitt im wesentlichen U-förmig ausgebildet, wobei die an die Nase 29 angrenzende Seitenwand der Nut 28 bzw. die Innenseite der Nase 29 schräg zur außenliegenden Stirnseite der Nase 29 hin verläuft.

In das freie Ende des Gleitstegs 12 ist eine nahe dem außenliegenden Gleitstegrand 30 angeordnete Ausnehmung 31 vorgesehen. Die rechteckförmige Ausnehmung 31 verläuft mit ihren langen Seiten senkrecht zur Längsmittenachse 32 des Gleitstegs 12, von denen die beiden Rechtecklängsseiten mittig durchsetzt werden. Der Klotz 22 ist auf das freie Ende des Gleitstegs 12 so aufgesteckt, daß die Nase 29 am Hebelarm 27 in die Aussparung 31 eingreift, während der Stegabschnitt 34 zwischen der Gleitstegausnehmung 31 und dem Gleitstegaußenrand 30 im Umklammerungseingriff mit der Sperrstück-Quernut 28 und dem dieser Nut gegenüberliegenden Abschnitt der Seitenwandung 33 der Sperrstück-Nut 25 steht. Dieser Umklammerungseingriff ist durch zwei stabile Lagen des Sperrstücks 22 am Gleitsteg 12 gekennzeichnet, von denen eine Lage in Figur 1 und die andere Lage in den Figuren 2 bis 4 gezeigt ist. Zwischen diesen beiden Lagen ist das Sperrstück 22 durch Schwenken um eine senkrecht zur Längsmittenachse 32 verlaufende, den Stegabschnitt 34 durchsetzende Achse verstellbar, und die beiden stabilen Stellungen sind durch ein Einschnappen der Umklammerungsverbindung gekennzeichnet. Das Einschnappen des Klotzes 22 in die jeweilige Endstellung kommt dadurch zustande, daß der Vierkantstegabschnitt 34 in zwei um 90° gedrehten Stellungen des Klotzes 22 in die Quernut 28 einzurasten vermag und dabei in flächigem Eingriff mit dem Boden dieser Quernut 28 steht.

In der in den Figuren 2 bis 4 dargestellten Sperrstellung befindet sich der Stoß- bzw. Sperrblock 22 seitlich neben dem jeweiligen Kupplungsglied 1, 2 derart, daß das Kupplungsglied der benachbarten Fördereinrichtung mit seinem Kupplungsbogensteg 6 gegen eine Stoßfläche 35 des Sperrstücks 22 anstößt, bevor dieses Kupplungsglied das andere Kupplungsglied zu hintergreifen vermag. Ein Kuppeln zweier benachbarter Fördereinrichtungen wird dadurch wirksam verhindert. Im Gegensatz hierzu findet der vorstehend beschriebene Kupplungsvorgang bei der in Figur 1 gezeigten Stellung der Sperrstücke 22 statt, in der diese in bezug auf das benachbarte Kupplungsglied hinter dem Gleitstück 12 seitlich neben dem Gleitbügel 15 zu liegen kommt.

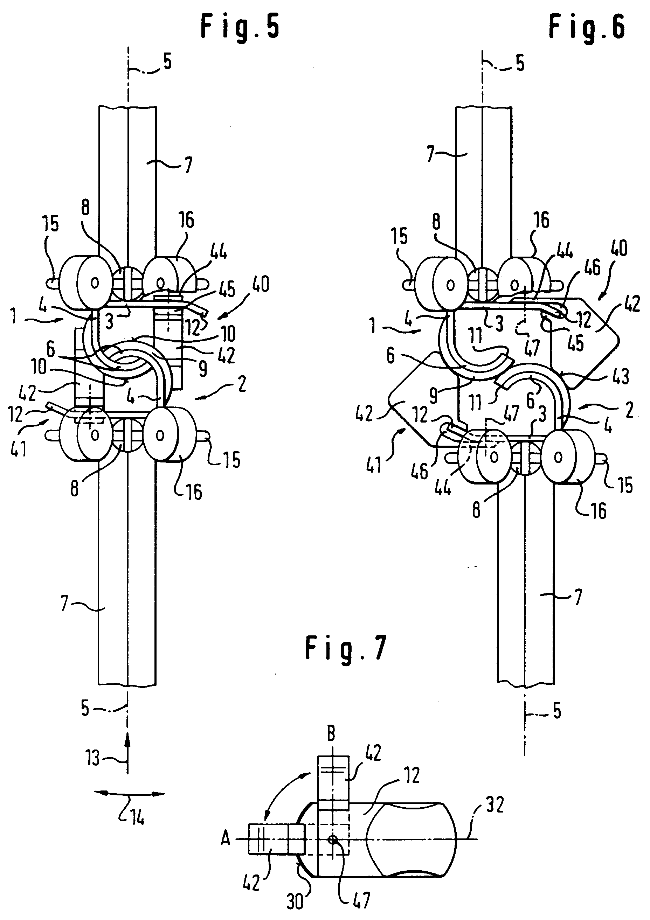

Eine weitere Ausführungsform der Sperreinrichtung ist in den Figuren 5 bis 7 gezeigt, in denen mit der Ausführungsform gemäß den Figuren 1 bis 4 übereinstimmende Teile nicht mit Bezugsziffern bezeichnet sind, um die Übersichtlichkeit der Zeichnung nicht zu stören.

Die Sperreinrichtung 40, 41 besteht jeweils aus einem Sperrklotz 42, der zwischen einer Sperrstellung, in der er mit einer an die Kontur des Kupplungsbogenstegs 6 angepaßten Sperrfläche 43 in Eingriff mit dem Bogensteg 6 des benachbarten Kupplungsglieds 1, 2 gelangt, bevor dieses mit dem Kupplungsglied in Eingriff gelangt, dem das Sperrstück 42 zugeordnet ist und einer Schwenkstellung, in der der Kupplungsvorgang stattfinden kann.

Der Kupplungsblock 42 weist einen seitlich vorstehenden, einstückig mit dem Block 42 ausgebildeten sowie eben verlaufenden Arm 44 und einen kürzeren, dem Arm 44 gegenüberliegenden und ebenfalls einstückig mit dem Block 42 ausgebildeten Arm 45 auf. Die Arme 44 und 45 umschließen eine geradlinig verlaufende Nut 46. Der Block 42 ist mittels des Arms 44 schwenkbar am Gleitsteg 12 angebracht. Zu diesem Zweck weist der Arm 44 an seinem freien Ende eine Bohrung auf, die von einer in eine Bohrung des Gleitstegs 12 eingesetzten Welle 47 durchsetzt wird. Der Arm 44 steht mit seiner innenliegenden Fläche in Kontakt mit einem ebenen Oberflächenbereich des Gleitstegs 12, der mit seinem kreisbogenförmigen Außenrand 30 vom ebenen Flächenabschnitt zur freien Bogenstegendkante 11 des Kupplungsglieds 1, 2 hin, ähnlich einer Skispitze, abgebogen ist.

Die Abbiegung des Randabschnitts des Gleitsteg 12 in bezug auf den ebenen Gleitstegabschnitt bzw. den ebenen Sperrstückarm 44 sowie die winklinge Ausrichtung des Arms 45 auf den Schwenkarm 44 zu ist so gewählt, daß der abgebogene Gleitstegendabschnitt spannungsfrei oder nahezu spannungsfrei an der Innenseite des Arms 45 dann anliegt, wenn der Sperrblock 42 seine in Figur 6 gezeigte Sperrstellung bzw. die Stellung A in Figur 7 einnimmt, in der er parallel mit der Längsmittenachse 32 des Gleitstegs 12 ausgerichtet ist. Um das Sperrstück 42 aus dieser Stellung herauszuschwenken, ist eine mit zunehmender Verschwenkung zunehmende Kraft erforderlich, die dadurch zustande kommt, daß der Sperrstückarm 45 zunehmend gegen den abgebogenen Endabschnitt des Gleitstegs 12 gepreßt wird und diesen Druck aufgrund seiner elastischen Ausbildung bis zu einem gewissen Grad auszuweichen vermag, bis er schließlich, wenn das Sperrstück 42 seine in Figur 5 gezeigte Bereitschaftsstellung bzw. die mit B in Figur 7 bezeichnete Position einnimmt, rastartig außer Eingriff mit dem gebogenen Gleitstegendabschnitt gelangt. Die stabilen Endstellungen A und B, entsprechend der Sperrstellung und der Bereitschaftsstellung für die Kupplung werden also auch bei dieser Ausführungsform der Sperreinrichtung durch einen Schnappvorgang erreicht, nämlich einmal durch ein Freikommen des Arms 45 von dem abgebogenen Gleitstückende und andererseits durch ein Entspannen des Arms 45 bei Erreichen des Zenits des Kreisbogens 30.

Durch Auflaufen des kurzen Sperrstückarms 45 auf das abgebogene Gleitstegende wird auf den langen Sperrstückarm 44 eine Kraft ausgeübt, durch die sein Ende in Richtung der Drehachse 47 nach außen von dem Gleitsteg weggedrängt wird. Diese die Schwenkverbindung des Haltearmstegs 44 beeinträchtigende Kraft kann beispielsweise kompensiert werden durch eine Druckfeder, die an dem Steg 44 von seiner dem Gleitsteg 12 gegenüberliegenden Seite in der Drehachse 47 angreift.

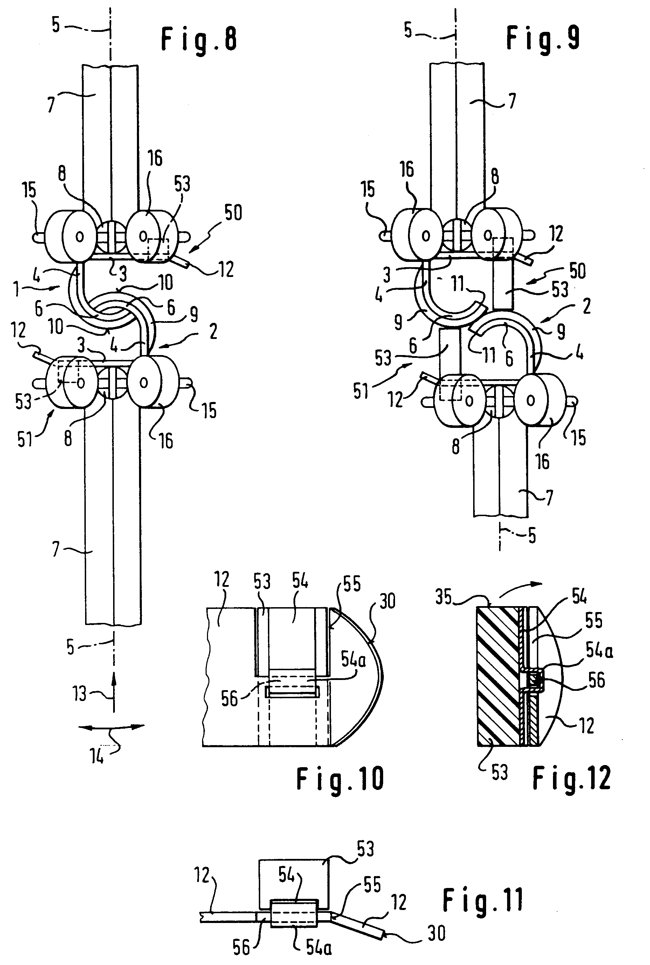

Eine dritte Ausführungsform der erfindungsgemäß vorgesehenen Sperreinrichtung für die Kupplungsvorrichtung ist in den Figuren 8 bis 12 dargestellt. Soweit diese Ausführungsform mit den vorstehend beschriebenen Ausführungsformen übereinstimmt, sind die Bezugsziffern ebenfalls nicht eingefügt.

Auch diese Sperreinrichtung 50, 51 ist als Schnappeinrichtung ausgebildet, die ihre stabilen Endstellungen, nämlich die Kupplungssperrstellung und die Bereitschaftsstellung durch einen Schnappvorgang erreichen.

Die Sperreinrichtung 50, 51 weist einen quaderförmigen Sperrkörper 53 aus vorzugsweise elastischem Material auf, um ein weiches Anstoßen der jeweiligen Kupplung zu gewährleisten. Alternativ hierzu kann der Sperrkörper aus einem Stahlmaterial bestehen und eine elastische Beschichtung seiner in Eingriff mit dem jeweiligen Kupplungsglied gelangenden Stoßfläche aufweisen.

Das Sperrstück 53 weist an einer Flachseite einen Federbügel 54 auf, der fest mit dem Sperrstück 53 verbunden ist und einen U-förmigen, vom Sperrstück 53 vorstehenden Mittenbereich 54a aufweist, der zur Schwenkbefestigung des Sperrstücks 53 an dem Gleitsteg 12 dient. Der Gleitsteg 12 ist im Bereich seines freien Endes mit einer rechtwinkligen Ausnehmung 55 versehen, die in eine Seitenkante des Gleitstegs 12 mündet und sich bis zur Längsmittenachse des Gleitstegs 12 in diesen hinein erstreckt. Mit Abstand vor dem innen gelegenen Ausnehmungsrand befindet sich parallel zur Längsmitte 32 des Gleitstegs 12 verlaufend ein Quersteg 56 rechteckigen, vorzugsweise quadratischen Querschnitts, der als Schwenklager für das Sperrstück 53 dient und den U-förmigen Abschnitt 54a der Feder 54 an dem Sperrstück 53 durchsetzt. Das Sperrstück 53 ist geringfügig schmaler als die Breitenabmessung der Ausnehmung 55, so daß das Sperrstück 53 schwenkverstellt werden kann zwischen einer Position, in der es sich auf der Rückseite des Gleitstegs 12 befindet (Figur 12), entsprechend der Bereitschaftsstellung, und einer Stellung, in der es sich auf der dem Kupplungsglied 1, 2 der gegenüberliegenden Kupplungsvorrichtung befindlichen Seite des Gleitstegs 12 um 90° verschwenkt befindet (Fig. 9). Das Sperrstück schnappt in seine beiden Stellungen aufgrund der Tatsache ein, daß in diesen Stellungen der mittlere U-förmige Federabschnitt 54a die Schwenkwelle 56 jeweils formschlüssig umgreift bzw. mit ihren geraden Abschnitten im Eingriff mit den geraden Kanten der Achse 56 steht.

## Patentansprüche

1. Kupplungsvorrichtung für eine Fördereinrichtung, die insbesondere für die innerbetriebliche Hängeförderung in der Bekleidungsindustrie benutzt wird, wobei die Fördereinrichtung eine an einer Laufschiene oder dergleichen hängende Tragschiene aufweist, an der Tragbügel (15), die mit Laufrollen (16) ausgerüstet sind, vorgesehen sind, wobei sich die Laufrollen (16) auf einer Tragschiene abstützen und die Tragbügel (15) nach unten hängen und wobei die Tragbügel (15) Tragrohre (7) oder dergleichen Haltevorrichtungen tragen und zwischen benachbarten Tragrohrenden miteinander verhakbarer Kupplungsglieder (1, 2) angeordnet sind, wobei die Kupplungsglieder (1, 2) aus einem streifenförmigen, dünnen Material bestehen und einen sich nach vorne, parallel zur Längsachse (5) der Tragrohre (7) erstreckenden Stützsteg (4) sowie einen sich daran anschließenden Bogensteg (6) aufweisen, wobei der Bogen des Bogenstegs (6) einwärts zur Längsachse (5) gerichtet ist und der Kulminationspunkt (10) zwischen der Längsachse (5) und dem Stützsteg (4) positioniert ist,
dadurch **gekennzeichnet,**
daß eine Sperreinrichtung (20, 21, 40, 41, 50, 51) zum wahlweisen Sperren und Freigeben der Kupplungsverbindung benachbarter Tragrohre (7) vorgesehen ist, die einen dem jeweiligen Kupplungsglied (1, 2) zugeordneten, mit dem Tragrohrende verbundenen Sperrklotz (22, 42, 53) umfaßt, der zwischen einer Sperrstellung, in der der Bogensteg (6) eines benachbarten Tragrohrs (7) gegen eine Sperrfläche (34) des Sperrklotzes (22, 42, 53) stößt, bevor er den Bogensteg (6) des Kupplungsstegs (1, 2) kuppelnd zu hintergreifen vermag, dem er zugeordnet ist, und einer Freigabestellung verschwenkbar ist, in der er den Kupplungseingriff nicht verhindert, und daß die Schwenklagerung des Sperrklotzes (22, 42, 53) so ausgebildet ist, daß er in seiner Sperrstellung und seiner Freigabestellung einschnappt.

2. Kupplungsvorrichtung nach Anspruch 1,
dadurch **gekennzeichnet,**
daß die Kontur der Sperrfläche (34) an die Außenkontur des Bogenstegs (6) angepaßt ist.

3. Kupplungsvorrichtung nach Anspruch 1 oder 2,
dadurch **gekennzeichnet,**
daß der Sperrklotz (42, 42, 53) an einem seitlich vom Tragrohrende vorstehenden Haltearm (12) angelenkt ist.

4. Kupplungsvorrichtung nach 3,
dadurch **gekennzeichnet,**
daß der Haltearm (12) ein Gleitsteg ist, der am dem Bogensteg (4) gegenüberliegenden Ende des Bogenstegs (6) schräg nach außen weisend angeordnet ist, wobei zwischen dem Bogen des Bogenstegs und dem Gleitsteg (12) eine Öffnung frei bleibt, durch die der Kupplungs-Bogensteg (6) des benachbarten Kupplungsglieds (1, 2) paßt.

5. Kupplungsvorrichtung nach einem der Ansprüche 1 bis 4,
dadurch **gekennzeichnet,**
daß in den Sperrklotz (22) unter Ausbildung eines Hebelarms (27) seitlich eine Nut (23) eingebracht ist, daß am freien Ende des Hebelarms (27) eine zur gegenüberliegenden Seitenwand der Nut (23) offene Quernut (28) im wesentlichen U-förmigen Querschnitts vorgesehen ist, und daß am freien Ende des Haltearms (12) ein Schwenklager in Gestalt eines Vierkants vorgesehen ist, der zwischen der Quernut (28) und der ihrem Boden gegenüberliegenden Seitenwandung der Nut (23) klemmend eingreift.

6. Kupplungsvorrichtung nach einem oder mehreren der Ansprüche 1 bis 4,
dadurch **gekennzeichnet,**
daß der Sperrklotz (42) über einen vorzugsweise federnden Haltearmsteg (44) schwenkbar am Haltearm (12) angelenkt ist, der mit einem gekrümmten, unter einem Winkel zur Schwenkebene des Haltearmstegs (44) verlaufenden Endabschnitt in eine quer zum Haltearmsteg (44) verlaufende Nut des Sperrklotzes (42) am sperrklotzseitigen Ende des Haltearmstegs (44) eingreift und eine kreisförmig gebogene Außenkante mit einem Bogenzentrum aufweist, das so in bezug auf das Schwenkzentrum des Haltearmstegs (44) versetzt ist, daß der gekrümmte Endabschnitt unter minimaler Spannung in der Nut geführt ist, wenn sie in der Sperrstellung der Sperreinrichtung zum Zenit der kreisförmig gebogenen Kante ausgerichtet ist, und daß die Freigabestellung der Sperreinrichtung durch eine Lage des Haltearmstegs seitlich neben der gebogenen Kante festgelegt ist.

7. Kupplungsvorrichtung nach einem der Ansprüche 1 bis 4,
dadurch **gekennzeichnet,**
daß der Sperrklotz (53) Quaderform hat und über einen Federbügel (54) mit einem U-förmigen Mittelteil (54a) an eine Vierkantdrehwelle (56) des Haltearms (12) gelagert ist, die innerhalb einer Ausnehmung (55) des Haltearms (12) angeordnet ist, und durch die hindurch der Sperrklotz (53) zwischen Stellungen beidseits des Haltearms verschwenkbar ist, in denen der Federbügel-Mitteilteil (54a) der Vierkantdrehwelle (56) formschlüssig umspannt.

## Claims

1. Coupling device for a conveyor system particularly of the type used for the in-house hanging transport of clothing in the garment industry, in which the conveyor comprises a support rail suspended on a guide track or similar, on which hangers (15) fitted with rollers (16) are provided, such that the rollers (16) rest on a support rail with the hangers (15) suspended underneath it and the hangers (15) carry supporting tubes (7) or similar holding elements and between adjacent supporting tube ends there are mutually engaging coupling elements (1, 2), such that the said coupling elements (1, 2) consist of a strip-shaped thin material and comprise a support web (4) extending forwards parallel to the longitudinal axis (5) of the supporting tube (7) with an arched web (6) at its end, positioned so that the curve of the arched web (6) is directed inwards towards the longitudinal axis (5) with its zenith point (10) located between the said longitudinal axis (5) and the support web (4),
**characterized in that**
a blocking device (20, 21, 40, 41, 50, 51) is provided for the selective blocking and release of the coupling connection between adjacent supporting tubes (7), the said blocking device comprising a blocking-piece (22, 42, 53) fitted to the end of the supporting tube and associated with the respective coupling element (1, 2) such that it can pivot between a blocking position, in which the arched web (6) of an adjacent supporting tube (7) makes contact with a blocking surface (34) of the blocking-piece (22, 42, 53) before coupling engagement can occur with the arched web (6) of the coupling element (1, 2) with which it is associated, and a release position in which it does not impede the coupling engagement, and the pivot bearing of the said blocking-piece (22, 42, 53) is designed such that the blocking-piece snaps into its blocking and release positions.

2. Coupling device according to Claim 1,
**characterized in that**
the contour of the blocking surface (34) conforms to the external contour of the arched web (6).

3. Coupling device according to Claims 1 or 2,
**characterized in that**
the blocking-piece (22, 42, 53) is fitted to a holding arm (12) that projects sideways from the end of the supporting tube.

4. Coupling device according to Claim 3,
**characterized in that**
the holding arm (12) is a sliding web arranged at the end of the arched web (6) opposite the arched web (4) and facing obliquely outwards, such that between the curve of the arched web and the sliding web (12) there is a gap through which the coupling arched web (6) of the adjacent coupling element (1, 2) can pass.

5. Coupling device according to any of Claims 1 to 4,
**characterized in that**
a lateral groove (23) is located in the blocking-piece (22) so that a lever arm (27) is formed, and at the free end of the said lever arm (27) a transverse groove of essentially U-shaped cross-section open towards the opposite side-wall of the groove (23) is provided, and at the free end of the holding arm (12) there is a pivot attachment of square design which engages in and is clamped between the transverse groove (28) and the side-wall of the groove (23) opposite the bottom of the groove (28).

6. Coupling device according to one or more of Claims 1 to 4,
**characterized in that**
the blocking-piece (42) is fitted pivotally to the holding arm (12), preferably via a springy holding arm web (44) which engages with a curved end section extending at an angle to the pivot plane of the holding arm web (44) into a groove in the blocking-piece (42) that extends transversely to the holding arm web (44) at the end thereof near the blocking-piece, the said holding arm web having an outer edge curved in the shape of a circle whose centre of curvature is offset relative to the pivoting centre of the holding arm web (44), such that in the blocking position of the blocking device the curved end section can be guided into the groove with minimal stress when it is facing towards the zenith of the circular curved edge, while the blocking device is in its release position when the holding arm web is located laterally against the curved edge.

7. Coupling device according to any of Claims 1 to 4,
**characterized in that**
the blocking-piece (53) has a rectangular shape and is fitted onto a square-section rotation shaft (56) of the holding arm (12) by means of a spring clip (54) with a U-shaped central portion (54a), the said shaft, being positioned inside a recess (55) of the holding arm (12) to enable the blocking-piece (53) to pivot between positions on the two sides of the holding arm, in which the central portion (54a) of the spring clip engages around the square rotation shaft (56) with a form-closing fit.

## Revendications

1. Dispositif d'accouplement pour un mécanisme de transport qui est utilisé pour le transport en suspension destiné à l'exploitation interne dans l'industrie du vêtement, dans lequel le mécanisme de transport présente un rail de support suspendu à une glissière ou analogues, sur lequel on prévoit des étriers de suspension (15) qui sont équipés de galets de roulement (16), les galets de roulement (16) s'appuyant sur un rail de support et les étriers de suspension (15) étant suspendus vers le bas, et dans lequel les étriers de suspension (15) portent des tubes de support (7) ou des dispositifs de maintien analogues et sont disposés entre des extrémités de tubes de support voisines aptes à s'accrocher l'une avec l'autre, dans lequel les éléments d'accouplement (1, 2) sont constitués par une matière mince en forme de bande et présentent une traverse de support (4) s'étendant vers l'avant parallèlement à l'axe longitudinal (5) des tubes de support (7), ainsi qu'une traverse cintrée (6) qui s'y raccorde, la courbure de la traverse cintrée (6) étant incurvée par rapport à l'axe longitudinal (5) et le point culminant (10) étant positionné entre l'axe longitudinal (5) et la traverse de support (4),
caractérisé en ce que
on prévoit un mécanisme de verrouillage (20, 21, 40, 41, 50, 51) pour le verrouillage et la libération de manière sélective de la liaison d'accouplement entre des tubes de support voisins (7), qui comprend un taquet d'arrêt (22, 42, 53) attribué à l'élément d'accouplement respectif (1, 2) et relié à l'extrémité de tube de support, qui peut pivoter entre une position de verrouillage dans laquelle la traverse cintrée (6) d'un tube de support voisin (7) vient buter contre une surface de verrouillage (34) du taquet d'arrêt (22, 42, 53) avant qu'il ne puisse saisir par l'arrière en accouplement la traverse cintrée (6) de la traverse d'accouplement (1, 2) à laquelle il est attribué, et une position de libération dans laquelle il n'empêche pas le contact par accouplement, et en ce que la structure de pivotement du taquet d'arrêt (22, 42, 53) est réalisée pour lui permettre de prendre sa position de verrouillage et sa position de libération par encliquetage.

2. Dispositif d'accouplement selon la revendication 1,
caractérisé en ce que
le contour de la surface de verrouillage (34) épouse le contour externe de la traverse cintrée (6).

3. Dispositif d'accouplement selon la revendication 1 ou 2,
caractérisé en ce que
le taquet d'arrêt (22, 42, 53) est articulé à un bras de support (1) faisant saillie latéralement par rapport à l'extrémité du tube de support.

4. Dispositif d'accouplement selon la revendication 3,
caractérisé en ce que
le bras de support (12) est une traverse de glissement qui est disposée en étant orientée en inclinaison vers l'extérieur sur l'extrémité de la traverse cintrée (6) opposée à la traverse cintrée (4), une ouverture restant libre entre la courbure de la traverse cintrée et la traverse de glissement (12), à travers laquelle vient s'insérer la traverse cintrée d'accouplement (6) de l'élément d'accouplement voisin (1, 2).

5. Dispositif d'accouplement selon l'une quelconque des revendications 1 à 4,
caractérisé en ce que,
dans le taquet d'arrêt (22), est pratiquée latéralement une rainure (23) en formant un bras de levier (27), en ce qu'on prévoit, à l'extrémité libre du bras de levier (27), une rainure (28) de section transversale essentiellement en U, ouverte sur la paroi latérale opposée de la rainure (23), et en ce que, à l'extrémité libre du bras de support (12), on prévoit un palier pivotant sous la forme d'un carré qui vient s'insérer par serrage entre la rainure transversale (28) et la paroi latérale de la rainure (23) opposée au fond de la première citée.

6. Dispositif d'accouplement selon l'une ou plusieurs des revendications 1 à 4,
caractérisé en ce que le taquet d'arrêt (42) est articulé en pivotement au bras de support (12) via une traverse (44) en forme de bras de support, de préférence du type à ressort, qui vient s'insérer avec une section terminale courbe s'étendant en formant un angle par rapport au plan de pivotement de la traverse (44) en forme de bras de support, dans une rainure du taquet d'arrêt (42) à l'extrémité côté taquet d'arrêt de la traverse (44) en forme de bras de support, s'étendant transversalement par rapport à la traverse (44) en forme de bras de support et qui présente une arête externe cintrée en forme de cercle et présentant un centre de cintrage qui est décalé par rapport au centre de pivotement de la traverse (44) en forme de bras de support de telle sorte que la section terminale courbe est guidée dans la rainure en étant soumise à une tension minimale lorsqu'elle est orientée, dans la position de verrouillage du mécanisme de verrouillage, vers le zénith de l'arête cintrée en forme de cercle, et en ce que la position de libération du mécanisme de verrouillage est déterminée par le fait que la traverse en forme de bras de support est située latéralement à côté de l'arête cintrée.

7. Dispositif d'accouplement selon l'une quelconque des revendications 1 à 4,
caractérisé en ce que
le taquet d'arrêt (53) a la forme d'un parallélépipède et est monté, via un étrier à ressort (54) muni d'une partie médiane (54a) en U, sur un arbre de rotation carré (56) du bras de support (12) qui est disposé à l'intérieur d'un évidement (55) pratiqué dans le bras de support (12) et au moyen duquel le taquet de verrouillage (53) peut pivoter complètement entre des positions, de part et d'autre du bras de support, dans lesquelles la partie médiane (54a) de l'étrier à ressort surplombe l'arbre de rotation carré (56) en procurant un blocage mécanique.
